# EUROPÄISCHE PATENTSCHRIFT

(11) **EP 2 066 203 B1**
(45) Veröffentlichungstag und Bekanntmachung des Hinweises auf die Patenterteilung: **03.08.2011**
(21) Anmeldenummer: 07802885.9
(22) Anmeldetag: 24.08.2007
(51) Int. Cl.: A47J 43/046, A47J 43/07

(54) **KÜCHENMASCHINE MIT ENTRIEGELUNGSKNOPF AM DECKEL**
FOOD PROCESSOR COMPRISING A RELEASE BUTTON ON THE COVER
ROBOT MÉNAGER COMPORTANT UN BOUTON DE DÉVERROUILLAGE SUR LE CAPUCHON

(30) Priorität: 13.09.2006 DE 102006042979
(43) Veröffentlichungstag der Anmeldung: 10.06.2009
(73) Patentinhaber: BSH Bosch und Siemens Hausgeräte GmbH, 81739 München (DE)
(72) Erfinder: ZIBRET, Igor, 3327 Smartno Ob Paki (SI); BRECKO, Ales, 1241 Kamnik (SI); BLAGOTINSEK, Andrej, 2380 Slovenj Gradec (SI); MAZEJ, Stanislav, 3303 Gomilsko (SI)
(86) Internationale Anmeldenummer: PCT/EP2007/058842
(87) Internationale Veröffentlichungsnummer: WO 2008/031709

(56) Entgegenhaltungen:
- EP-A- 1 535 558
- WO-A-95/20903

## Beschreibung

### Hintergrund der Erfindung

Die vorliegende Erfindung betrifft eine Küchenmaschine mit einem Deckel und einer Verriegelungseinrichtung gemäß dem Oberbegriff des Anspruchs 1.

### Stand der Technik

Aus der europäischen Offenlegungsschrift EP 1535558 A1 ist eine Küchenmaschine mit zwei Kupplungsstellen für Bearbeitungsgeräte bekannt, von denen eine mit einem Deckel abdeckbar ist. Der Deckel ist um eine Gelenkachse schwenkbar am Gehäuse befestigt, sodass er von einer geschlossenen Stellung, in der er die Kupplungsstelle abdeckt, in eine offene Stellung geschwenkt werden kann, in der das Bearbeitungsgerät auf die Kupplungsstelle aufgesetzt werden kann. Der Deckel weist auf seiner Unterseite eine Lasche mit einem Verankerungselement auf, das bei geschlossenem Deckel in eine Einbuchtung in Gehäuse der Küchenmaschine eingreift. Dort wird sie von einem Rückhalteelement im Gehäuse festgehalten, um den Deckel in seiner geschlossenen Stellung zu halten. Das Rückhalteelement ist mit einem an der Außenseite des Gehäuses der Küchenmaschine angeordneten Entriegelungsknopf verbunden. Durch Betätigen des Entriegelungsknopfs wird das Verankerungselement gegen die Kraft eines elastischen Rückstellelements des Rückhalteelements freigegeben und der Deckel schwenkt angetrieben durch ein weiteres elastisches Rückstellelement in der Nähe der Gelenkachse selbsttätig in seine offene Stellung.

Die WO 95/20903 A offenbart ebenfalls eine Küchenmaschine mit einer Kupplungsstelle zum Ankuppeln eines Bearbeitungswerkzeugs. Die Kuppelstelle der WO 95/20903 A wird mittels eines Schwenkarms abgedeckt, der in seinem an der Kuppelstelle angrenzenden Bereich einen Bedienknopf aufweist. Im Betriebszustand wird der Schwenkarm mit Hilfe einer Verriegelungseinrichtung am Hauptkörper der Küchenmaschine gesichert.

### Der Erfindung zugrundeliegende Aufgabe

Es ist wünschenswert, eine Küchenmaschine in verschiedenen Modellvarianten anbieten zu können, wobei z.B. eine preiswertere Version mit einem einfachen aufsetzbaren Deckel und eine komfortablere Version mit einer Verriegelungsvorrichtung ausgestattet ist. Um Kosten zu sparen, ist es wünschenswert, dass die verschiedenen Modellvarianten möglichst weitgehend aus identischen Komponenten konstruiert sind.

Außerdem kann es wünschenswert sein, dass die Verriegelungsvorrichtung möglichst intuitiv handhabbar ist.

### Erfindungsgemäße Lösung

Zu Lösung der Aufgabe lehrt die Erfindung eine Küchenmaschine mit einem Deckel und einer Verriegelungseinrichtung mit den Merkmalen des Anspruchs 1.

Dadurch, dass der Entriegelungsknopf am Deckel der Küchenmaschine angeordnet ist, kann erreicht werden, dass eine Küchenmaschine einfach durch Ersetzen des Deckels mit der Verrieglungseinrichtung aufrüstbar ist. Im Vergleich dazu müssen bei der bekannten Küchenmaschine für die Modellvarianten unterschiedliche Gehäuse bereitgestellt werden, weil dort der Entriegelungsknopf am Gehäuse der Küchenmaschine angeordnet ist.

Außerdem kann mit der Erfindung eine besonders intuitive Handhabung erreicht werde, wenn man davon ausgeht, dass ein unvoreingenommener Benutzer zunächst am Deckel selbst nach einer Möglichkeit sucht, diesen zu entriegeln.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Der Deckel weist erfindungsgemäß ein Verankerungselement auf, und das Gehäuse ein Rückhalteelement, das mit dem Verankerungselement zusammenwirken kann, um den Deckel in der geschlossenen Stellung zu verriegeln. Die Verankerungs- und Rückhalteelemente wirken vorzugsweise nach Art eines Schnappverschlusses zusammen, wobei zum Verriegeln jeweils ein erstes Rastelement eines Verankerungselements und ein zweites Rastelement eines Rückhalteelements ineinander greifen.

Vorzugsweise weist das erste Rastelement eine Oberkante und das zweite Rastelement eine Unterkante auf, die in Verschlussrichtung gesehen unter die Oberkante des ersten Rastelements greifen kann, um den Deckel in der geschlossenen Stellung zu verriegeln. Das Verankerungselement ist vorzugsweise als Zunge ausgebildet, die sich von der Unterseite des Deckels in Richtung der Kupplungsstelle erstreckt. Die Zunge ist vorzugsweise senkrecht zur ihrer Erstreckungsrichtung elastisch verbiegbar. Das zweite Rastelement ist vorzugsweise ein Vorsprung am von Deckel wegweisenden Ende der Zunge. Besonders vorzugsweise sind zwei Zungen vorgesehen, wobei die beiden Vorsprünge zueinander weisen.

Das Rückhalteelement ist vorzugsweise ein Ring, besonders vorzugsweise ein Kreisring an der Kupplungsstelle und das erste Rastelement wird vorzugsweise vom oberen Rand einer Öffnung in der Wand des Rings gebildet. Oberhalb der Öffnung ist der Ring hohlkegelstumpfartig ausgebildet, wobei der Kegelradius zur Unterkante hin zunimmt. So kann erreicht werden, dass beim Schießen des Deckels das zungenartige Verankerungselement elastisch gegen eine zum Rückhalteelement hin gerichtete Vorspannung nach außen verbogen wird, bevor es mit seinem Vorsprung unter die Oberkante der Öffnung einrasten kann. An Stelle der Öffnung kann auch eine einfache Einbuchtung auf der Außenseite des Rings vorgesehen sein.

Der Entriegelungsknopf weist erfindungsgemäß einen Entriegelungsabschnitt auf, der mit dem Verankerungselement vorzugsweise derart zusammenwirkt, dass er in der Freigabestellung das Verankerungselement von dem Rückhalteelement löst. Dazu biegt er das Verankerungselement besonders vorzugsweise gegen seine Vorspannung vom Rückhalteelement weg, sodass die beiden Rastelemente nicht mehr ineinander greifen.

Der Entriegelungsabschnitt ist vorzugsweise als Zunge ausgebildet, die sich von der Unterseite des Entriegelungsknopfs in Richtung der Kupplungsstelle erstreckt. Ein bevorzugter Entriegelungsabschnitt ist mindestens in der Freigabestellung zwischen Verankerungselement und Rückhalteelement angeordnet, um das Verankerungselement von dem Rückhalteelement zu lösen. Beim Betätigen des Entriegelungsknopfs schiebt sich der Entriegelungsabschnitt zwischen Verankerungselement und Rückhalteelement. Besonders vorzugsweise umfasst der Entriegelungsabschnitt zwei Zungen, die sich beim betätigen des Entriegelungsknopfs jeweils zwischen ein Verankerungselement und das Verriegelungselement schieben, um das Verankerungselement vom Rückhalteelement zu lösen.

Außerdem weist der bevorzugte Entriegelungsknopf einen Betätigungsabschnitt auf, der von der bei geschlossenem Deckel zugänglichen Außenseite des Deckels betätigbar ist. Der bevorzugte Entriegelungsknopf ist in einer vorzugsweise zentralen Öffnung des Deckels angeordnet. Der Betätigungsabschnitt schließt im Ruhezustand des Entriegelungsknopfes vorzugsweise bündig mit der Außenseite des Deckels ab. Zum Entriegeln kann der Entriegelungsabschnitt von einem Benutzer vorzugsweise nach unten in Richtung Kupplungsstelle gedrückt werden. Dabei schieben sich vorteilhafterweise der am Betätigungsabschnitt angebrachte Entriegelungsabschnitt nach unten zwischen Verankerungselement und Rückhalteelement, um diese voneinander zu lösen.

Eine bevorzugte Küchenmaschine weist eine erste Rückstelleinrichtung auf, die den Deckel in die geöffnete Stellung vorspannt. So kann erreicht werden, dass sich der Deckel nach dem Entriegeln selbstständig von der geschlossenen in die geöffnete Stellung bewegt. Die erste Rückstelleinrichtung ist vorzugsweise in einem Scharnier untergebracht, mit dem der Deckel am Gehäuse der Küchenmaschine schwenkbar angebracht ist. Sie umfasst besonders vorzugsweise eine Schraubenfeder. Außerdem umfasst die Rückstelleinrichtung vorzugsweise eine Bremseinrichtung, z.B. einen Visko-Dämpfer, um die Öffnungsbewegung zu dämpfen.

Der Verriegelungsknopf weist vorzugsweise eine zweite Rückstelleinrichtung auf, die den Entriegelungsknopf in seine Ruhestellung vorspannt. So kann erreicht werden, dass der Entriegelungsknopf nach der Betätigung von der Entriegelungsstellung in seine Ruhestellung zurückkehrt. Die Rückstelleinrichtung ist vorzugsweise eine Schraubenfeder.

Die Rückstellkraft der ersten und der zweiten Rückstelleinrichtung sind vorzugsweise so aufeinander abgestimmt, dass die zweite Rückstelleinrichtung den Deckel in der Freigabestellung des Entriegelungsknopfs soweit anheben kann, dass die Oberkante des ersten Rastelements in Öffnungsrichtung über der Unterkante des zweiten Rastelementes liegt. Besonders vorzugsweise ist die Rückstellkraft der ersten Rückstelleinrichtung bei geschlossenem Deckel größer als die Rückstellkraft der zweiten Rückstelleinrichtung, wenn der Entriegelungsknopf in seiner Entriegelungsstellung ist. Durch die Abstimmung der Rückstellkräfte kann sichergestellt werden, dass auch beim Entlasten des Entriegelungsknopfs die Rastelemente nicht mehr ineinander greifen können und sich der Deckel angetrieben durch die erste Rückstelleinrichtung öffnen kann.

An der mit dem Deckel ausgestatteten Kupplungsstelle der Küchenmaschine ist vorzugsweise eine Welle angeordnet, um ein Werkzeug des Bearbeitungsgeräts rotierend anzutreiben. Die Welle wird vorzugsweise mit einem Motor, besonders vorzugsweise einem Elektromotor, angetrieben. Eine bevorzugte Küchenmaschine ist außerdem mit einem Schutzmechanismus ausgestattet, um zu vermeiden, dass die Welle betätigt wird, wenn die Kupplungsstelle nicht durch ein Bearbeitungsgerät oder den Deckel abgedeckt ist. Der Schutzmechanismus weist dazu vorzugsweise eine Erfassungseinrichtung auf, um die Anwesenheit oder Abwesenheit des Bearbeitungsgeräts oder des Deckels zu erfassen und abhängig davon die Stromzufuhr zum Motor zu schließen oder zu unterbrechen.

Ein bevorzugter Deckel ist mit einem Vorsprung ausgestattet, der bei geschlossenem Deckel eine Erfassungseinrichtung des Schutzmechanismus betätigt, um diesem anzuzeigen, dass die Kupplungsstelle abgedeckt ist. Dadurch, dass mittels der Verriegelungseinrichtung der Deckel auf dem Gehäuse fixiert werden kann, kann vorteilhaft sichergestellt werden, dass der Vorsprung bei geschlossenem Deckel mit ausreichender Kraft betätigt ist.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Eine perspektivische Ansicht einer erfindungsgemäßen Küchenmaschine mit geschlossenem Deckel;
- Fig. 2:: Eine perspektivische Ansicht einer erfindungsgemäßen Küchenmaschine mit offenem Deckel;
- Fig. 3:: Eine Schnittansicht der Verriegelungseinrichtung einer erfindungsgemäßen Küchenmaschine;
- Fig. 4:: Eine Schnittansicht der ersten Rückstelleinrichtung einer erfindungsgemäßen Küchenmaschine; und

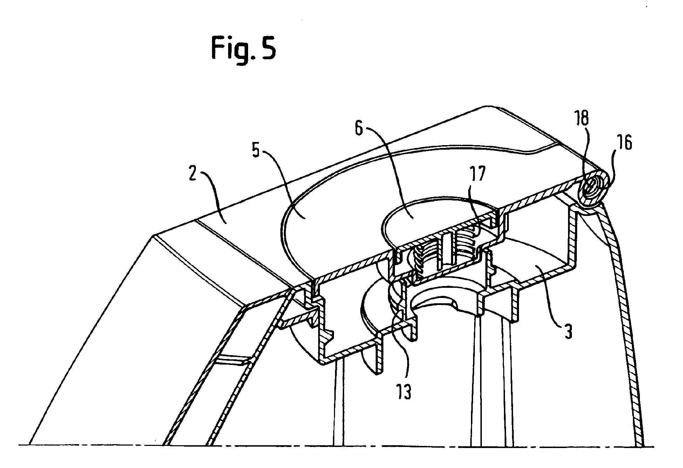

- Fig. 5:: Eine perspektivische Aufrissansicht der Verriegelungseinrichtung und der Rückstelleinrichtung einer erfindungsgemäßen Küchenmaschine.

### Ausführliche Beschreibung eines Ausführungsbeispiels

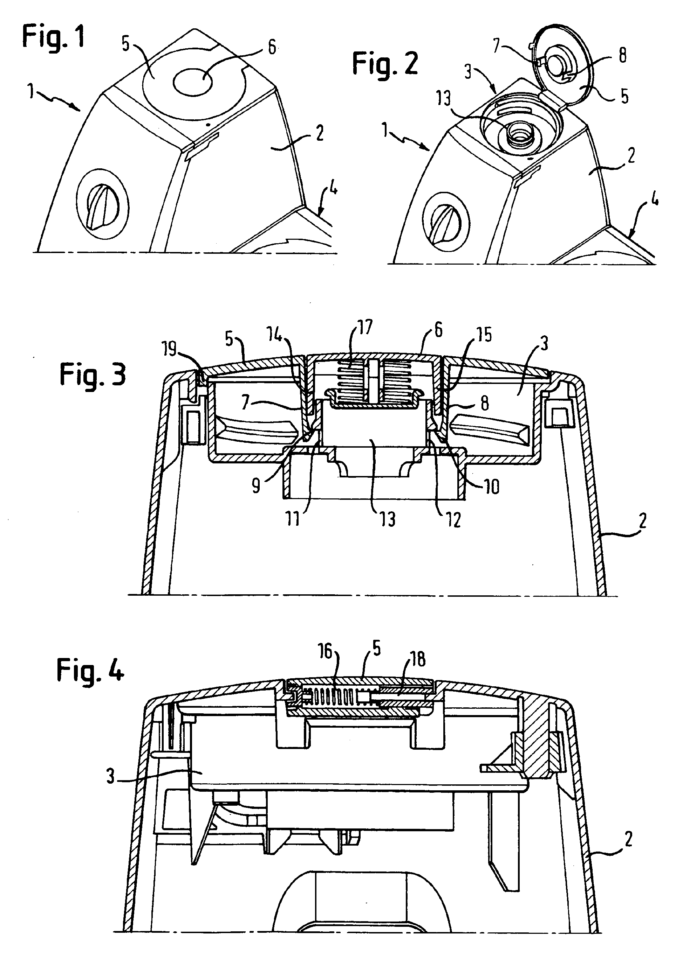

Die in den Figuren dargestellte Küchenmaschine 1 weist eine Gehäuse 2 mit einer ersten Ankupplungsstelle 3 für ein erstes Bearbeitungsgerät und eine zweite Ankupplungsstelle 4 für ein zweites Bearbeitungsgerät auf. Die erste Ankupplungsstelle 3 ist mit einem Deckel 5 abdeckbar, der am Gehäuse 2 zwischen einer geschlossenen (Fig. 1) und einer offenen (Fig. 2) Stellung schwenkbar befestigt ist. Mittels einer Verriegelungseinrichtung kann der Deckel 5 in der geschlossenen Stellung verriegelt werden. Mittels eines Entriegelungsknopfs 6 kann die Verriegelung gelöst werden, sodass der Deckel 5 in die offene Stellung geschwenkt werden kann.

Die Verriegelungseinrichtung umfasst zwei zungenartige Verankerungselemente 7, 8, die von der Unterseite des Deckels 5 abstehen, und deren zueinander weisende Vorsprünge 9, 10, die in entsprechende Öffnungen 11, 12 eines ringförmigen Rückhalteelements an der ersten Kupplungsstelle 3 eingreifen können, um den Deckel 5 in seiner geschlossenen Stellung lösbar am Gehäuse 2 zu fixieren.

Von der Unterseite des Entriegelungsknopfs 6 stehen zwei Zungen 14, 15 ab, die zwischen dem Rückhalteelement 13 und den zungenartigen Verankerungselementen 7, 8 liegen. beim Niederdrücken des Entriegelungsknopfs spreizen die Zungen 14, 15 des Entriegelungsknopfs die Verankerungselemente 7, 8 voneinander weg, sodass sie sich von dem ringförmigen Rückhalteelement 13 lösen.

Die Küchenmaschine weist außerdem eine erste Rückstelleinrichtung mit einer ersten Schraubenfeder 16 auf, die den Deckel 5 in seine geöffnete Stellung vorspannt. eine zweite Schraubenfeder 17 spannt den Verriegelungsknopf 6 in seine Ruhestellung vor. Die Rückstellkraft der ersten Schraubenfeder 16 bei geschlossenem Deckel ist größer als die Rückstellkraft der zweiten Schraubenfeder bei niedergedrücktem Entriegelungsknopf 6, sodass sich, nachdem sich die Verankerungselemente 7, 8 vom Rückhalteelement 13 gelöst haben, der Deckel 5 bei noch niedergedrücktem Entriegelungsknopf 6 soweit anhebt, dass die Vorsprünge 9, 10 über die Öffnungen 11, 12 gehoben werden. So wird verhindert, dass Die Verriegelung beim Loslassen des Entriegelungsknopfes wieder einrastet. Stattdessen kann sich der Deckel 5 nun angetrieben durch die erste Rückstelleinrichtung 16 öffnen. Die erste Rückstelleinrichtung 16 umfast außerdem eine Visko-Dämpfer 18, um die Öffnungsbewegung abzubremsen.

Das ringförmige Rückhalteelement umgibt eine Öffnung im Gehäuse 2 der Küchenmaschine, aus der eine (nicht dargestellte) Welle zum Antrieb eines Werkzeugs eines auf die Kupplungsstelle aufsetzbaren Bearbeitungsgeräts, z.B. eines Mixbechers, von Außen zugänglich ist. Das Werkzeug kann z.B. ein Rührbesen, ein Knethaken oder ein Messer sein.

Die Welle wird ihrerseits von eine Motor angetrieben, der sich in dem Gehäuseteil unterhalb der Kupplungsstelle 3 befindet. Damit ein Benutzer sich nicht an der rotierenden Welle oder an einem daran angebrachten Werkzeug verletzten kann, wenn auf die Kupplungsstelle 3 kein Bearbeitungsgerät aufgesetzt ist und auch der Deckel 5 nicht in seiner geschlossenen Stellung ist, weist die Küchenmaschine eine Schutzeinrichtung auf. Diese unterbricht die Stromzufuhr zum Motor bei fehlendem Bearbeitungsgerät und nicht geschlossenem Deckel 5.

Um der Schutzeinrichtung anzuzeigen dass der Deckel 5 in der geschlossenen Stellung ist, ist dieser mit einem Vorsprung 18 ausgestattet, der mit einer Erfassungseinrichtung der Schutzeinrichtung zusammenwirkt. Dazu greift der Vorsprung 18, bei geschlossenem Deckel 5 in eine Öffnung im Gehäuse 2, wo er von der Erfassungseinrichtung detektiert wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Erfindung erlaubt es auf einfache Weise, eine Küchenmaschine mit einer Verriegelungseinrichtung aufzurüsten. Außerdem ist die erfindungsgemäße Küchenmaschine intuitiv zu handhaben.

## Patentansprüche

1. Küchenmaschine (1) mit einer Kupplungsstelle (3) zum Ankuppeln eines Bearbeitungsgeräts, einem Deckel (5), der von einer geschlossenen Stellung, in der er die Kupplungsstelle (3) abdeckt, in eine offene Stellung, in der die Kupplungsstelle (3) zum Ankuppeln des Bearbeitungsgeräts frei liegt, schwenkbar an einem Gehäuse (2) der Küchenmaschine (1) angebracht ist und einer Verriegelungseinrichtung, um den Deckel (5) in der geschlossenen Stellung zu verriegeln, mit einem Entriegelungsknopf (6), der durch Betätigung von einer Ruhestellung in eine Freigabestellung bewegbar ist, um die Verriegelung zu lösen, sodass der Deckel (5) in die offene Stellung geschwenkt werden kann, wobei der Entriegelungsknopf (6) am Deckel (5) angeordnet ist, wobei der Deckel (5) ein Verankerungselement (7, 8) aufweist und das Gehäuse (2) ein Rückhalteelement (13), das mit dem Verankerungselement (7, 8) zusammenwirken kann, um den Deckel (5) in der geschlossenen Stellung zu verriegeln, **dadurch gekennzeichnet, dass** der Entriegelungsknopf (6) einen Entriegelungsabschnitt (14, 15) aufweist, der mit dem Verankerungselement (7, 8) derart zusammenwirkt, dass er in der Freingabestellung das Verankerungselement (13) von dem Rückhalteelement (13) löst.

2. Küchenmaschine (1) nach Anspruch 1, **dadurch gekennzeichnet, dass** das Verankerungselement (7, 8) ein erstes Rastelement (9, 10) mit einer Oberkante und das Rückhalteelement (13) ein zweites Rastelement (11, 12) mit einer Unterkante aufweist, wobei die Oberkante des ersten Rastelements (10, 11) in Verschlussrichtung gesehen unter die Unterkante des Rückhalteelements (13) greifen kann, um den Deckel (5) in der geschlossenen Stellung zu verriegeln.

3. Küchenmaschine (1) nach Anspruch 1, **dadurch gekennzeichnet, dass** der Entriegelungsabschnitt (14, 15) mindestens in der Freigabestellung zwischen Verankerungselement (7, 8) und Rückhalteelement (13) angeordnet ist, um das Verankerungselement (7, 8) von dem Rückhalteelement (13) zu lösen.

4. Küchenmaschine (1) nach einem der vorherigen Ansprüche, **dadurch gekennzeichnet, dass** sie eine erste Rückstelleinrichtung (16) aufweist, die den Deckel (5) in die geöffnete Stellung vorspannt.

5. Küchenmaschine (1) nach einem der vorherigen Ansprüche, **dadurch gekennzeichnet, dass** der Entriegelungsknopf (6) eine zweite Rückstelleinrichtung (17) aufweist, die den Entriegelungsknopf (6) in seine Ruhestellung vorspannt.

6. Küchenmaschine (1) nach einem der vorherigen Ansprüche, **dadurch gekennzeichnet, dass** die Rückstellkraft der ersten und der zweiten Rückstelleinrichtung (16, 17) so aufeinander abgestimmt sind, dass die zweite Rückstelleinrichtung (17) den Deckel (5) in der Freigabestellung des Entriegelungsknopfs (6) soweit anheben kann, dass die Oberkante des ersten Rastelements (9, 10) in Öffnungsrichtung über der Unterkante des zweiten Rastelementes (11, 12) liegt.

7. Küchenmaschine (1) nach einem der vorherigen Ansprüche, **dadurch gekennzeichnet, dass** an der Kupplungsstelle (3) eine Welle angeordnet ist, um ein Werkzeug des Bearbeitungsgeräts rotierend anzutreiben, und die Küchenmaschine (1) mit einem Schutzmechanismus ausgestattet ist, um zu vermeiden, dass die Welle betätigt wird, wenn die Kupplungsstelle (3) nicht durch ein Bearbeitungsgerät oder den Deckel (5) abgedeckt ist.

8. Küchenmaschine (1) nach Anspruch 7, **dadurch gekennzeichnet, dass** der Deckel (5) mit einem Vorsprung (18) ausgestattet ist, der bei geschlossenem Deckel (5) eine Erfassungseinrichtung des Schutzmechanismus betätigt, um diesem anzuzeigen, dass die Kupplungsstelle (3) abgedeckt ist.

## Claims

1. Food processor (1) with a coupling point (3) for coupling on of a processing appliance, a lid (5), which is mounted on a housing (2) of the food processor (1) to be pivotable from a closed setting in which it covers the coupling point (3) into an open setting in which it exposes the coupling point (3) for coupling on of the processing appliance, and a locking device in order lock the lid (5) in the closed setting, with an unlocking button (6) which through actuation is movable from a rest setting into a release setting in order to release the locking so that the lid (5) can be pivoted into the open setting, wherein the unlocking button (6) is arranged at the lid (5), wherein the lid (5) has an anchoring element (7, 8) and the housing (2) has a retaining element (13) which can co-operate with the anchoring element (7, 8) in order to lock the lid (5) in the closed setting, **characterised in that** the unlocking button (6) has an unlocking section (14, 15) which co-operates with the anchoring element (7, 8) in such a manner that in the release setting it releases the anchoring element (13) from the retaining element (13).

2. Food processor (1) according to claim 1, **characterised in that** the anchoring element (7, 8) comprises a first detent element (9, 10) with an upper edge and the retaining element (13) comprises a second detent element (11, 12) with a lower edge, wherein the upper edge of the first detent element (10, 11) as seen in the closing direction can engage under the lower edge of the retaining element (13) in order to lock the lid (5) in the closed setting.

3. Food processor (1) according to claim 1, **characterised in that** the unlocking section (14, 15) at least in the release setting is arranged between the anchoring element (7, 8) and the retaining element (13) in order to release the anchoring element (7, 8) from the retaining element (13).

4. Food processor (1) according to any one of the preceding claims, **characterised in that** it comprises a first restoring device (16) which biases the lid (5) into the open setting.

5. Food processor (1) according to any one of the preceding claims, **characterised in that** the unlocking button (6) comprises a second restoring device (17) which biases the unlocking button (6) into its rest setting.

6. Food processor (1) according to any one of the preceding claims, **characterised in that** the restoring forces of the first and second restoring devices (16, 17) are so matched to one another that the second restoring device (17) can lift the lid (5) into the release setting of the unlocking button (6) to the extent that the upper edge of the first detent element (9, 10) in the opening direction lies above the lower edge of the second detent element (11, 12).

7. Food processor (1) according to any one of the preceding claims, **characterised in that** arranged at the coupling point (3) is a shaft for rotationally driving a tool of the processing appliance and the food processor (1) is equipped with a protective mechanism in order to avoid the shaft being actuated when the coupling point (3) is not covered by a processing appliance or the lid (5).

8. Food processor (1) according to claim 7, **characterised in that** the lid (5) is furnished with a projection (18) which when the lid (5) is closed actuates a detecting device of the protective mechanism in order to indicate to this that the coupling point (3) is covered.

## Revendications

1. Robot ménager (1) muni d'un point d'accouplement (3) destiné à accoupler un appareil de traitement, d'un couvercle (5) qui est placé de manière pivotante sur un boîtier (2) du robot ménager (1) d'une position fermée, dans laquelle il recouvre le point d'accouplement (3), en une position ouverte, dans laquelle le point d'accouplement (3) destiné à accoupler un appareil de traitement est dégagé, et d'un dispositif de verrouillage afin de verrouiller le couvercle (5) dans la position fermée, d'un bouton de déverrouillage (6) qui, en étant actionné, est déplaçable d'une position de repos en une position de libération afin d'enlever le verrouillage de sorte que le couvercle (5) puisse être pivoté en la position ouverte, le bouton de déverrouillage (6) étant disposé sur le couvercle (5), le couvercle (5) présentant un élément de fixation (7, 8) et le boîtier (2) présentant un élément de retenue (13) pouvant coopérer avec l'élément de fixation (7, 8) afin de verrouiller le couvercle (5) dans la position fermée, **caractérisé en ce que** le bouton de déverrouillage (6) présente une section de déverrouillage (14, 15) qui coopère avec l'élément de fixation (7, 8) de telle manière que, dans la position de libération, il détache l'élément de fixation (13) de l'élément de retenue (13).

2. Robot ménager (1) selon la revendication 1, **caractérisé en ce que** l'élément de fixation (7, 8) présente un premier élément d'enclenchement (9, 10) comprenant un bord supérieur et **en ce que** l'élément de retenue (13) présente un deuxième élément d'enclenchement (11, 12) comprenant un bord inférieur, le bord supérieur du premier élément d'enclenchement (10, 11), vu en direction de fermeture, pouvant avoir prise en dessous du bord inférieur de l'élément de retenue (13) afin de verrouiller le couvercle (5) dans la position fermée.

3. Robot ménager (1) selon la revendication 1, **caractérisé en ce que** la section de déverrouillage (14, 15), au moins dans la position de libération, est disposée entre l'élément de fixation (7, 8) et l'élément de retenue (13) afin de détacher l'élément de fixation (7, 8) de l'élément de retenue (13).

4. Robot ménager (1) selon l'une quelconque des revendications précédentes, **caractérisé en ce qu'**il présente un premier dispositif de rappel (16) qui précontraint le couvercle (5) dans la position ouverte.

5. Robot ménager (1) selon l'une quelconque des revendications précédentes, **caractérisé en ce que** le bouton de déverrouillage (6) présente un deuxième dispositif de rappel (17) qui précontraint le bouton de déverrouillage (6) dans sa position de repos.

6. Robot ménager (1) selon l'une quelconque des revendications précédentes, **caractérisé en ce que** les forces de rappel du premier et du deuxième dispositifs de rappel (16, 17) sont harmonisées de manière à ce que le deuxième dispositif de rappel (17) puisse soulever le couvercle (5) dans la position de libération du bouton de déverrouillage (6) de telle manière que le bord supérieur du premier élément d'enclenchement (9, 10) soit en direction d'ouverture au-dessus du bord inférieur du deuxième élément d'enclenchement (11, 12).

7. Robot ménager (1) selon l'une quelconque des revendications précédentes, **caractérisé en ce qu'**un arbre est disposé au point d'accouplement (3) afin d'entraîner de manière rotative un outil de l'appareil de traitement, et **en ce que** le robot ménager (1) est équipé d'un mécanisme de protection afin d'éviter que l'arbre ne soit commandé lorsque le point d'accouplement (3) n'est pas recouvert par un appareil de traitement ou par le couvercle (5).

8. Robot ménager (1) selon la revendication 7, **caractérisé en ce que** le couvercle (5) est équipé d'une saillie (18) qui, lorsque le couvercle (5) est fermé, commande un dispositif de détection du mécanisme de protection afin d'indiquer à celui-ci que le point d'accouplement (3) est recouvert.
